# EUROPÄISCHE PATENTANMELDUNG

(11) **EP 0 870 660 A2**
(43) Veröffentlichungstag der Anmeldung: **14.10.1998**
(21) Anmeldenummer: 98106248.2
(22) Anmeldetag: 06.04.1998
(51) Int. Cl.: B60T 11/06, B60T 7/08, F16C 1/22

(54) **Einstellvorrichtung mit selbsttätigem Längenausgleich für einen Betätigungszug, insbesondere für Kraftfahrzeuge**

(30) Priorität: 11.04.1997 DE 19715307; 09.08.1997 DE 19734573
(71) Anmelder: KÜSTER & Co. GmbH, 35630 Ehringshausen (DE)
(72) Erfinder: Gutierrez, Carmelo, 35630 Ehringshausen-Katzenfurt (DE); Schmidt, Thomas, 35410 Hungen/Rodheim (DE)
(74) Vertreter: Müller, Eckhard, Dr.

(57) **Zusammenfassung**

Es wird eine Einstellvorrichtung (20) mit selbsttätigem Längenausgleich für Seilzüge (3, 12, 13) zur Betätigung von Fahrzeugbremsen mittels eines Betätigungselementes beschrieben. Die Einstellvorrichtung (20) weist eine Hebelvorrichtung (22) auf, die einends schwenkbar an einem fahrzeugfesten Punkt (24) angelenkt ist und anderenends eine Aufnahme (26) für den zum Betätigungselement führenden Seilzug (3) aufweist. Desweiteren ist die Hebelvorrichtung (22) mit einer Halterung mit Aufnahmen (11) für die zu den Bremsen führenden Seilzüge (12, 13) verbunden. Die Hebelvorrichtung (22) besitzt zwei mittels eines Drehlagers (14), Drehgelenks oder dgl. verbundene Hebelarme (2, 7), wobei die Hebelarme (2, 7) mittels eines Gesperres (1) in einer relativen Winkellage feststellbar sind. Die Winkellage ist in Abhängigkeit von dem jeweiligen Längenausgleich einstellbar.

## Beschreibung

Die Erfindung betrifft eine Einstellvorrichtung mit selbsttätigem Längenausgleich für Betätigungszüge, wie Seilzüge oder dgl., insbesondere zur Betätigung von Fahrzeugbremsen mittels eines Betätigungselements mit einer Hebelvorrichtung, die einends schwenkbar an einem fahrzeugfesten Punkt angelenkt ist und anderenends eine Aufnahme für den zum Betätigungselement führenden Seilzug aufweist und mit der eine Halterung mit Aufnahme für die zu den Bremsen führenden Seilzüge verbunden ist.

Bei derartigen Betätigungszügen tritt im allgemeinen das Problem auf, daß sie fertigungsbedingt nicht gleich lang ausgebildet sind, so daß für eine genaue Einstellung ihrer Länge, insbesondere bei dem Einsatz als Betätigungszug für Bremsen, eine Einstellung vorgenommen werden muß. Aufgrund der Längung der Betätigungszüge während des Betriebes und aufgrund von bspw. Spiel der Bremsen selbst bedarf es auch einer Einstellung bzw. Nachstellung der Betätigungszüge während der Nutzungsdauer.

Aus der DE 3741350 A1 ist bereits eine Einstellvorrichtung mit den eingangs genannten Merkmalen bekannt geworden, welche für die Feststellbremse eines Kraftfahrzeuges bestimmt ist. Für den selbsttätigen Ausgleich von Längungen in den Seilen von Feststellbremsen weist die Vorrichtung ein mittels eines Zugseils verstellbares längliches Übertragungsglied auf, an welchem ein doppelarmiges Ausgleichsjoch angeordnet ist, das seinerseits zu jeweils einer Radbremse führende Seilstränge hält. Die Hebelarme des Ausgleichsjochs sind relativ zueinander verschwenkbar gelagert und zur Übertragung von Bremskräften in der einen Schwenkrichtung mittels einer Sperrvorrichtung an einem Verschwenken gehindert. Eine Spannvorrichtung versucht dabei ständig, die Hebelarme des Ausgleichsjochs in die andere Richtung zu verschwenken. Dadurch, daß die Ausgleichs- bzw. Einstellbewegung durch zwei an der Halterung für die zu den Bremsen führenden Seilzüge vorgesehen ist, ist die bekannte Vorrichtung recht kompliziert aufgebaut.

Weiterhin ist aus der DE 19546931 A1 bereits eine Einstellvorrichtung bekannt, die eine i.w. gehäuseartige Aufnahme mit zwei schwenkbar gelagerten, durch Federelemente vorgespannten Rastsegmenten aufweist. Die Rastsegmente sind jeweils mit einem Seilzug verbindbar. Desweiteren ist ein in einer Aufnahme verschiebbar geführtes Sperrstück vorgesehen, welches bei einer Betätigung des Seilzuges von einer die Rastsegmente entsperrenden Position in eine die Rastsegmente sperrende Position überführbar ist. Obgleich sich diese bekannte Einstellvorrichtung in der Praxis gut bewährt hat, besteht das Bedürfnis nach einer neuen Einstellvorrichtung mit kompakterer Bauform. Hierbei ist auch zu berücksichtigen, daß der für die Einstellvorrichtung vorhandene Bauraum, beispielsweise im Bereich des Betätigungshebels selbst oder im Bereich des Fahrzeuges, in welchem eine Verzweigung der Betätigungszüge zu den beiden Hinterradbremsen vorgesehen ist, unter Umständen nur sehr klein bemessen ist.

Der Erfindung liegt demgegenüber die Aufgabe zugrunde, eine Einstellvorrichtung mit kompakter Bauform und konstruktiv einfachem Aufbau zu schaffen.

Diese Aufgabe wird bei der Einstellvorrichtung mit den eingangs genannten Merkmalen im wesentlichen dadurch gelöst, daß die Hebelvorrichtung zwei mittels eines Drehlagers, Drehgelenks oder dgl. verbundene Hebelarme aufweist, welche mittels eines Gesperres in einer relativen Winkellage feststellbar sind, wobei die Winkellage in Abhängigkeit von dem jeweiligen Längenausgleich einstellbar ist. Dadurch, daß die Mittel zum selbsttätigen Längenausgleich nicht im Bereich der Halterung, sondern im Bereich der Hebelvorrichtung angeordnet sind, wird eine konstruktiv einfache bzw. **unaufwendige** Vorrichtung geschaffen, die auch bei einem räumlich beengten Einbauraum in dem jeweiligen Kraftfahrzeug einsetzbar ist.

Eine erste vorteilhafte Ausführungsform zeichnet sich dadurch aus, daß die zwei Hebelarme jeweils einends an dem fahrzeugfesten Punkt mittels des Drehlagers oder dgl. angelenkt sind.

Dabei bietet es sich an, daß die Aufnahme für den Seilzug zum Bremsgeber am ersten Hebelarm angeordnet und die Halterung für die Seilzüge zu den Radbremsen mit dem zweiten Hebelarm verbunden ist.

Es hat sich weiterhin als vorteilhaft erwiesen, daß der erste Hebelarm eine langlochartige Durchbrechung aufweist, durch welche ein Befestigungselement der Halterung am zweiten Hebelarm gesteckt ist. Hierdurch ist eine freie Verschwenkbarkeit bzw. Änderung der relativen Winkellage der beiden Hebelarme im Falle der Längung eines Seilzuges ohne weiteres möglich.

Nach einer weiteren Ausführungsform der Erfindung bietet es sich an, daß der zweite Hebelarm einends an dem fahrzeugfesten Punkt angelenkt und anderenends mittels des Drehlagers oder dgl. mit dem ersten Hebelarm verbunden ist. In diesem Falle besteht die Möglichkeit, die Halterung fest mit dem Drehlager der beiden Hebelarme zu verbinden.

Erfindungsgemäß kann die Aufnahme für den Seilzug am ersten Hebelarm angeordnet und die Halterung mit dem Drehlager der Hebelarme verbunden sein.

Das Gesperre ist nach einer Ausführungsform der Erfindung durch eine Sperrklinke sowie eine entsprechend angepaßte Zahnung gebildet, wobei die Zahnung an dem einen Hebelarm angeordnet und die Sperrung an dem anderen Hebelarm, bspw. mittels eines Bolzens oder dgl., schwenkbar befestigt sind.

Es bietet sich weiterhin an, daß die Sperrklinke mittels eines Federelements, insbesondere einer Zugfeder oder dgl. in Sperrstellung vorgespannt ist.

Von Vorteil weisen die Zahnung bzw. die Sperrklinke eine asymmetrische Formgebung, wie Sägezahn oder dgl. auf. Hierdurch ist bei einer Betätigung des Betätigungselements mit der damit einhergehenden Schwenkung der Hebelvorrichtung für eine sichere Festlegung der relativen Winkellage der beiden Hebelarme gesorgt, während im Falle der Nichtbetätigung des Hebelelements und einer unter Umständen erforderlich werdenden Längenkompensation die relative Winkellage der beiden Hebelarme ohne weiteres änderbar ist, indem die Sperrklinke sozusagen über die Zahnung des einen Hebelarmes hinwegratscht, bis die beiden Hebelarme eine neue, relative Winkellage zum Längenausgleich angenommen haben.

Hierzu hat es sich desweiteren als äußerst vorteilhaft erwiesen, daß die Hebelarme mittels eines Federelements, insbesondere der Zugfeder, mit einer Vorspannung beaufschlagt sind. Dabei wirkt die Vorspannung im Sinne einer effektiven Verkürzung der Länge der Seilzüge, so daß insbesondere jegliche Lose in dem Einstellsystem ausgeglichen werden können.

Die Halterung ist von Vorteil durch einen Ausgleichsarm und ein Ausgleichselement gebildet, wobei das Ausgleichselement in etwa mittig an den Ausgleichsarm angelenkt ist und an den beideseitigen Enden die Aufnahme für die zu den Bremsen führenden Seilzüge trägt.

Dadurch, daß der Ausgleichsarm einends mit wenigstens einem Hebelarm schwenkbar verbunden ist, werden Änderungen in der Winkellage der Hebelvorrichtung sozusagen selbsttätig kompensiert.

Es bietet sich auch an, daß das Ausgleichselement mit den anderen Ende des Ausgleichsarms schwenkbar verbunden ist, so daß unterschiedliche Längungen in den zu den Bremsen führenden Seilzügen durch ein entsprechendes Verschwenken des Ausgleichselements an dem Ausgleichsarm kompensiert werden können.

Weitere Ziele, Merkmale, Vorteile und Anwendungsmöglichkeiten der vorliegenden Erfindung ergeben sich aus der nachfolgenden Beschreibung der Ausführungsbeispiele. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung.

Es zeigen:
- Figur 1: ein erstes Ausführungsbeispiel der Erfindung in Seitenansicht und schematischer Darstellung und
- Figur 2: ein zweites Ausführungsbeispiel der Erfindung in Seitenansicht und schematischer Darstellung.

Die in den Figuren dargestellt Einstellvorrichtung 20 dient zum selbsttätigen Längenausgleich für Seilzüge 3, 12, 13, mit denen bspw. die Fahrzeugbremsen mittels eines Betätigungselements, wie Handbremshebel, betätigt werden können. Die Einstellvorrichtung 20 weist eine Hebelvorrichtung 22 auf, die einends schwenkbar an einem fahrzeugfesten Punkt 24 angelenkt ist. Anderenends besitzt die Hebelvorrichtung 22 eine Aufnahme 26 für den zum Betätigungselement führenden Seilzug 3.

Weiterhin ist die Hebelvorrichtung 22 mit einer Halterung 28 verbunden, die Aufnahmen 11 für die zu den Bremsen führenden Seilzüge 12, 13 aufweist.

Die Hebelvorrichtung besitzt zwei mittels eines Drehlagers 14, Drehgelenks oder dgl. verbundene Hebelarme 2, 7. Die Hebelarme 2, 7 sind mittels eines Gesperres 1 in einer relativen Winkellage zueinander feststellbar. Die Winkellage ist in Abhängigkeit von dem jeweiligen Längenausgleich feststellbar.

Das Gesperre 1 ist durch eine Sperrklinke 4 sowie eine Zahnung 6 gebildet, wobei die Zahnung 6 an dem einen Hebelarm 2, 7 angeordnet und die Sperrklinke 4 an dem anderen Hebelarm 7, 2, bspw. mittels eines Bolzens 5 oder dgl., schwenkbar befestigt sind. Weiterhin ist die Sperrklinke 4 mittels eines Federelements, insbesondere einer Zugfeder 8, in Sperrstellung vorgespannt. Die Zahnung 6 bzw. die Sperrklinke 4 besitzen eine asymmetrische Formgebung, wie Sägezahn oder dgl.

Schließlich sind die Hebelarme 2, 7 mittels eines Federelements, insbesondere Zugfeder 8, mit einer Vorspannung beaufschlagt.

Die Halterung 28 ist durch einen Ausgleichsarm 9 sowie ein Ausgleichselement 10 gebildet. Der Ausgleichsarm 9 ist einends mit wenigstens einem der Hebelarme 2, 7 schwenkbar verbunden. Das Ausgleichselement 10 ist an das andere Ende des Ausgleichsarms 9 ebenfalls schwenkbar angelenkt.

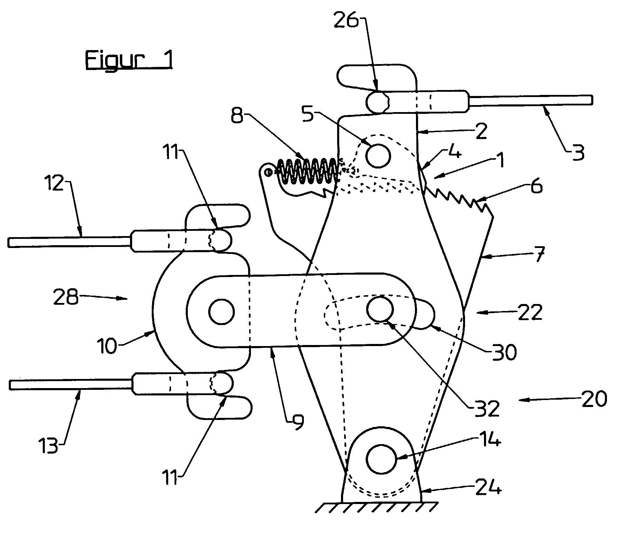

Im Ausführungsbeispiel der Figur 1 sind die beiden Hebelarme 2, 7 einends an dem fahrzeugfesten Punkt 24 mittels des Drehlagers 14 oder dgl. angelenkt. Die Aufnahme 26 für den Seilzug 3 ist am ersten Hebelarm 2 angeordnet, wobei die Halterung 28 mit dem zweiten Hebelarm 7 verbunden ist. Der erste Hebelarm 2 besitzt eine langlochartige Durchbrechung 30, durch welche ein Befestigungselement 32 der Halterung 28 am zweiten Hebelarm 7 gesteckt ist.

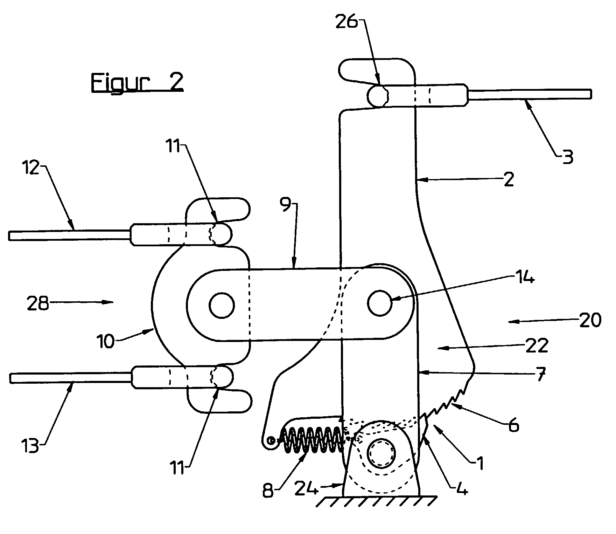

Im Unterschied hierzu ist nach dem Ausführungsbeispiel der Figur 2 der zweite Hebelarm 7 einends an dem fahrzeugfesten Punkt 24 angelenkt und anderenends mittels des Drehlagers 14 oder dgl. mit dem ersten Hebelarm 2 verbunden. Die Aufnahme 26 für den Seilzug 3 ist ebenfalls am ersten Hebelarm 2 angeordnet, wobei die Halterung 28 mit dem Drehlager 14 der Hebelarme 2, 7 verbunden ist.

Wenn eine Seillose im System vorhanden ist, bewirkt die Zugfeder 8 ein Verschwenken des Hebelarmes 7 in Uhrzeigerdrehrichtung, wodurch die Halterung 28 zusammen mit den angelenkten Seilzügen 12, 13 in Richtung des Betätigungshebels für die Handbremse bzw. die Feststellbremse verschoben wird und dementsprechend ein Längenausgleich erfolgt.

Das Ausführungsbeispiel der Figur 2 weist gegenüber dem der Figur 1 insoweit einen unterschiedlichen konstruktiven Aufbau auf, als das Drehlager 14 für die beiden Hebelarme 2, 7 nicht an dem fahrzeugfesten Punkt 24, sondern an dem freien Ende des Hebelarmes 7 angeordnet ist. Weiterhin wirkt die Verzahnung 6 des Hebelarms 2 mit der an dem fahrzeugfesten Punkt 24 gelagerten Sperrklinke 4 zusammen. Auch in dem Ausführungsbeispiel der Figur 2 ist zwischen dem Hebelarm 2 bzw. einem nasenförmigen Ansatz des Hebelarms 2 und der Sperrklinke 4 bzw. den am fahrzeugfesten Punkt 24 angelenkten Hebelarm 7 eine Zugfeder 8 gespannt.

Beim Auftreten einer Seillose bewirkt die Zugfeder 8 ein Verschwenken des Hebelarms 2 entgegen dem Uhrzeigerdrehsinn, wobei der die Zahnung 6 tragende Abschnitt des Hebelarms 2 in Richtung des Handbremsbetätigungshebels bzw. der Feststellbremse verschoben wird. Es ist dabei zu berücksichtigen, daß die Aufnahme 26 des Hebelarms 2 aufgrund der Anlenkung des zum Betätigungshebel führenden Bremsseils 3 im wesentlichen ortsfest ist.

Beiden Ausführungsbeispielen der erfindungsgemäßen Einstellvorrichtung 20 ist gemeinsam, daß aufgrund des Einsatzes einer Hebelvorrichtung 22, bestehend aus zwei Hebelarmen 2, 7, bei einem Auftreten einer Seillose in dem System die relative Winkellage der Hebelarme 2, 7 derart geändert wird, daß der Abstand zwischen den Aufnahmen 11 und 26 letztlich verkürzt und somit die Seillose aus dem System genommen wird. Die Hebelarme 2, 7 sind mittels der Zugfeder 8 in Richtung einer Verkürzung des Abstandes zwischen den Aufnahmen 11 und 26 vorgespannt, wobei das Gesperre 1 dafür sorgt, daß zum einen die Seillose selbsttätig aus dem System herausgenommen und andererseits für eine sichere Fixierung der jeweiligen Winkellage der beiden Hebelarme 2, 7 gesorgt wird, sobald durch Betätigung des Betätigungselementes mittels des Seilzuges 3 eine Zugkraft auf die Hebelvorrichtung 22 ausgeübt wird.

### Bezugszeichenliste

- 1: Gesperre
- 2: Hebelarm
- 3: Seilzug
- 4: Sperrklinke
- 5: Bolzen
- 6: Zahnung
- 7: Hebelarm
- 8: Zugfeder
- 9: Ausgleichsarm
- 10: Ausgleichselement
- 11: Aufnahmen
- 12: Seilzug
- 13: Seilzug
- 14: Drehlager
- 20: Einstellvorrichtung
- 22: Hebelvorrichtung
- 24: fahrzeugfester Punkt
- 26: Aufnahme
- 28: Halterung
- 30: Durchbrechung
- 32: Befestigungselement

## Patentansprüche

1. Einstellvorrichtung (20) mit selbsttätigem Längenausgleich für Betätigungszüge, wie Seilzüge (3, 12, 13), zur Betätigung von Fahrzeugbremsen oder dgl. mittels eines Betätigungselements mit einer Hebelvorrichtung (22), die einends schwenkbar an einem fahrzeugfesten Punkt (24) angelenkt ist und anderenends eine Aufnahme (26) für den zum Betätigungselement führenden Seilzug (3) aufweist, wobei mit der Hebelvorrichtung (22) eine Halterung (28) mit Aufnahmen (11) für die zu den Bremsen oder dgl. führenden Seilzüge (12, 13) verbunden ist, dadurch gekennzeichnet, daß die Hebelvorrichtung (22) zwei mittels eines Drehlagers (14), Drehgelenks oder dgl. verbundene Hebelarme (2, 7) aufweist, welche mittels eines Gesperres (1) in einer relativen Winkellage feststellbar sind, wobei die Winkellage in Abhängigkeit von dem jeweiligen Längenausgleich einstellbar ist.

2. Einstellvorrichtung nach Anspruch 1, dadurch gekennzeichnet, daß die zwei Hebelarme (2, 7) jeweils einends an dem fahrzeugfesten Punkt (24) mittels des Drehlagers (14) oder dgl. angelenkt sind.

3. Einstellvorrichtung nach einem der Ansprüche 1, Zusatz 2, dadurch gekennzeichnet, daß die Aufnahme (26) für den Seilzug (3) zum Bremsgeber am ersten Hebelarm (2) angeordnet und die Halterung (28) für die Seilzüge (12, 13) zu den Radbremsen mit dem zweiten Hebelarm (7) verbunden ist.

4. Einstellvorrichtung nach Anspruch 3, dadurch gekennzeichnet, daß der erste Hebelarm (2) eine langlochartige Durchbrechung (30) aufweist, durch welche ein Befestigungselement (32) der Halterung (28) am zweiten Hebelarm (7) gesteckt ist.

5. Einstellvorrichtung nach Anspruch 1, dadurch gekennzeichnet, daß der zweite Hebelarm (7) einends an dem fahrzeugfesten Punkt (24) angelenkt und anderenends mittels des Drehlagers (14) oder dgl. mit dem ersten Hebelarm (2) verbunden ist.

6. Einstellvorrichtung nach Anspruch 5, dadurch gekennzeichnet, daß die Aufnahme (26) für den Seilzug (3) am ersten Hebelarm (2) angeordnet und die Halterung (28) mit dem Drehlager (14) der Hebelarme (2, 7) verbunden sind.

7. Einstellvorrichtung nach einem der vorhergehenden Ansprüche, dadurch gekennzeichnet, daß das Gesperre (1) durch eine Sperrklinke (4) sowie eine Zahnung (6) gebildet ist, wobei die Zahnung (6) an dem einen Hebelarm (2, 7) angeordnet und die Sperrklinke (4) an dem anderen Hebelarm (7, 2), bspw. mittels eines Bolzens oder dgl. schwenkbar befestigt sind.

8. Einstellvorrichtung nach Anspruch 5, dadurch gekennzeichnet, daß die Sperrklinke (4) mittels eines Federelements, insbesondere einer Zugfeder (8) in Sperrstellung vorgespannt ist.

9. Einstellvorrichtung nach einem der Ansprüche 7 oder 8, dadurch gekennzeichnet, daß die Zahnung (6) bzw. die Sperrklinke (4) eine asymmetrische Formgebung, wie Sägezahn oder dgl. aufweist.

10. Einstellvorrichtung nach einem der vorhergehenden Ansprüche, dadurch gekennzeichnet, daß die Hebelarme (2, 7) mittels eines Federelements, insbesondere einer Zugfeder (8), mit einer Vorspannung beaufschlagt sind.

11. Einstellvorrichtung nach einem der vorgehenden Ansprüche, dadurch gekennzeichnet, daß die Halterung (28) durch einen Ausgleichsarm (9) und ein Ausgleichselement (10) gebildet ist.

12. Einstellvorrichtung nach Anspruch 11, dadurch gekennzeichnet, daß der Ausgleichsarm (9) einends mit wenigstens einem Hebelarm (2, 7) schwenkbar verbunden ist.

13. Einstellvorrichtung nach Anspruch 12, dadurch gekennzeichnet, daß das Ausgleichselement (10) mit den anderen Ende des Ausgleichsarms (9) schwenkbar verbunden ist.
